# EUROPEAN PATENT SPECIFICATION

(11) **EP 0 530 030 B1**
(45) Date of publication and mention of the grant of the patent: **16.12.1998**
(21) Application number: 92307835.6
(22) Date of filing: 28.08.1992
(51) Int. Cl.: H04J 3/06, H04J 3/14

(54) **Circuit for detecting a synchronizing signal in frame synchronized data transmission**
Schaltungsanordnung zur Detektion eines Synchronisationssignals in einer Datenübertragung mit Rahmensynchronisation
Circuit pour la détection d'un signal de synchronisation lors de la transmission de données avec synchronisation de trâme

(30) Priority: 30.08.1991 JP 220495/91; 03.06.1992 JP 142552/92
(43) Date of publication of application: 03.03.1993
(60) Divisional application: 98201740.2
(73) Proprietor: NEC CORPORATION, Tokyo (JP)
(72) Inventor: Uomoto, Yasutomo, c/o NEC Corporation, Tokyo (JP)
(74) Representative: Orchard, Oliver John

(56) References cited:
- DE-A- 3 013 554
- DE-A- 3 132 198
- DE-A- 3 722 567
- GB-A- 964 901
- US-A- 3 472 961
- US-A- 3 594 502
- ELECTRONICS AND COMMUNICATIONS IN JAPAN, vol.52-A, no.5, May 1969, NEW YORK US pages 10 - 16 H. MIYAKAWA ET AL. 'Methodsof Construction of Comma-Free Codes with Fixed Block Sync Pattern'

## Description

The present invention relates to a frame synchronization data transmission system. A circuit for detecting an error in a synchronizing signal in a frame synchronization data transmission system will be described below by way of example in illustration of the invention.

In a particular frame synchronization data transmission system, the frame is made up of a plurality of subframes, and a frame synchronizing signal, which represents the start of the frame of the data signal, is assigned to the starting or first subframe with a code of a specified pattern. In order to punctuate, if required, the remaining part of the frame, a subframe synchronizing signal of a predetermined logic level is assigned to a specified bit, say the kth bit, of each subframe. The kth bit is normally the first bit.

There will now be described previously proposed frame formats and circuits with reference to Figs. 1 to 4 of the accompanying drawings in which:-
Fig. 1 shows a previously proposed frame format of a data signal, an enable signal and a clock pulse signal for use in a frame synchronization data transmission system,
Fig. 2 shows another frame format, in which subframe synchronizing signals are assigned,
Fig. 3 shows a data transmission system including a circuit for detecting a frame synchronizing signal, and
Fig. 4 shows a block diagram of a typical previously proposed circuit for detecting a frame synchronizing signal.

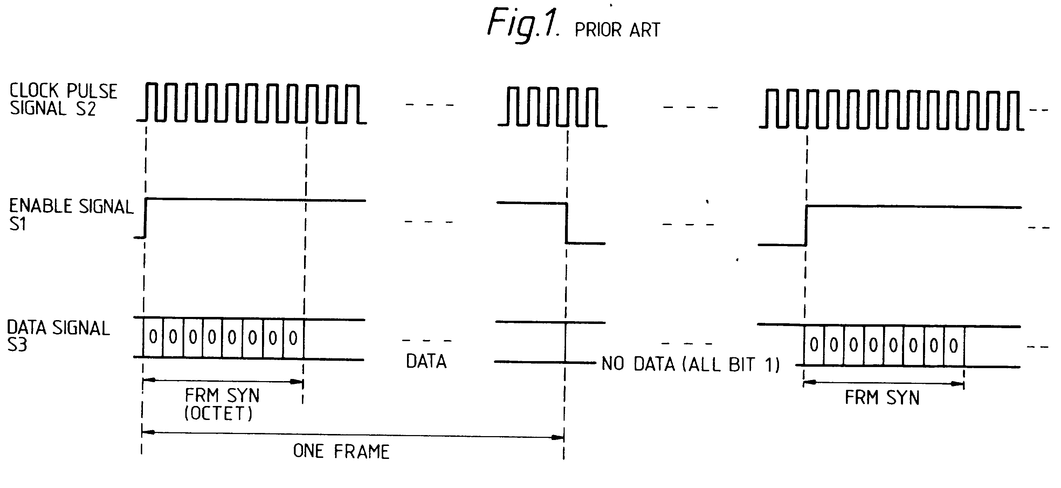

Referring to Fig. 1 there is shown the frame format of a data signal S3, an enable signal S1 and a clock pulse signal S2 for use in a frame synchronization data transmission system. In the figure, one frame is made up of a plurality of subframes, each subframe having 8 bits, each bit being transmitted in synchronization with a clock pulse signal S2. Hereafter, each subframe with 8 bits is referred to as an octet or an OCT. The enable signal S1 makes logic 1 only when a datum is present. A code made up of octadic Os is assigned to the starting octet as the frame synchronizing signal. There is no subframe or octet synchronizing signal in the frame format shown in Fig. 1.

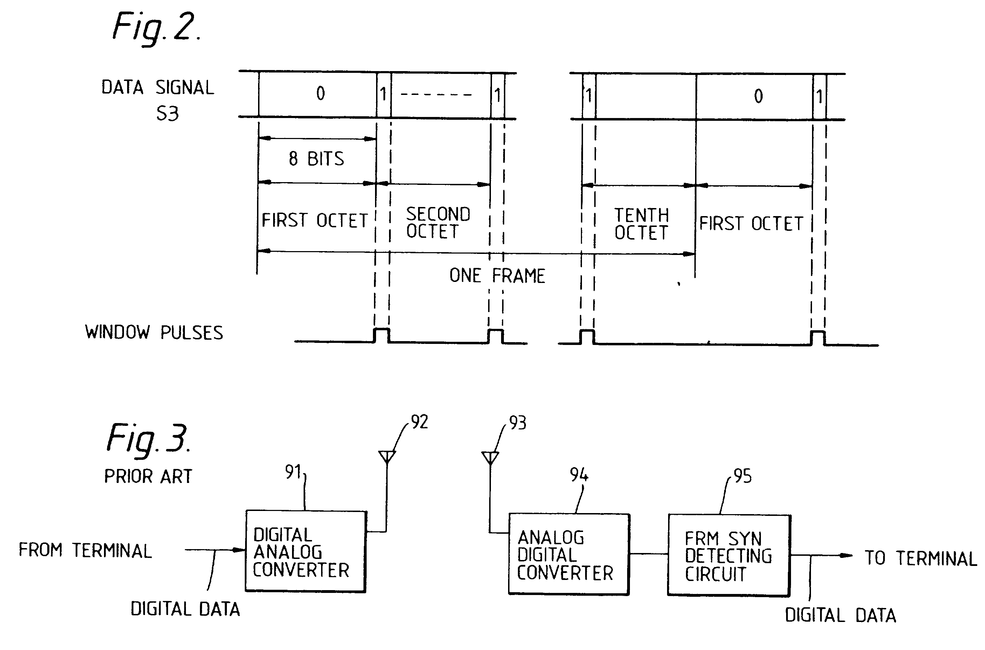

Fig. 2 shows another frame format, in which there is an octet synchronizing signal. The synchronizing signal is assigned to the first bit of each octet and designated with the logic 1. Hereafter, the frame synchronizing signal and the subframe synchronizing signal are referred to as the FRM SYN and the SBFRM SYN, respectively, and the two SYNs are referred to in general as the SYN.

Fig. 3 shows a data transmission system, in which a circuit for detecting an FRM SYN is used. Hereafter the circuit for detecting an FRM SYN is referred to as the FRM SYN detecting circuit. At the transmitting end, a digital data signal sent from a transmitting terminal is converted to an analog data signal by means of digital-analog converter 91. The analog data signal is then transmitted through a transmitting antenna 92, received by a receiving antenna 93 and supplied to an analog-digital converter 94 to be converted to a digital data signal. An FRM SYN detecting circuit 95 detects an FRM SYN from the digital data signal in order to distinguish whether the digital data signal is a frame of the transmitted data signal, or a data signal which involves any other information, and then sends the digital data signal to a receiving terminal.

In an actual case the FRM SYN detecting circuit is provided at the transmitting end as well, in order to enable a check to be made to see if there has been any possible change in the data signal caused by noise.

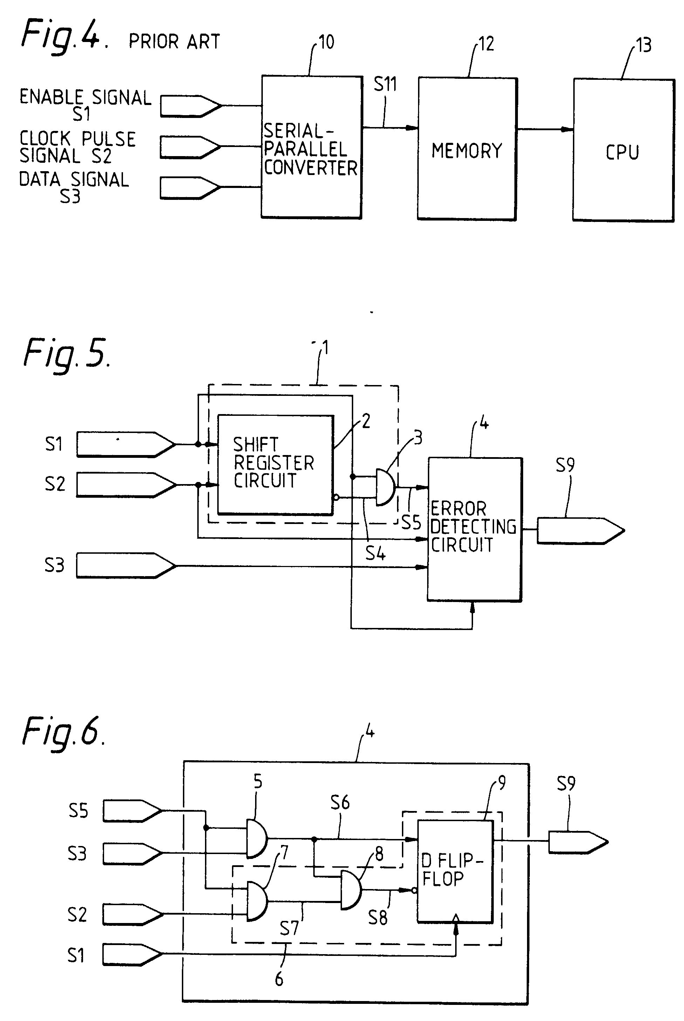

Fig. 4 shows a block diagram of a typical previously proposed SYN detecting circuit. The circuit is composed of a serial-parallel converter 10, a memory 12 and a CPU 13. The serial-parallel converter 10, which is enabled by an enable signal S1, receives a serial data signal S3, and converts the serial data signal S3 to a parallel data signal S11 in synchronization with a clock pulse signal S2. A parallel data signal S11 is first stored in the memory 12. After all of the data signals transmitted by the data transmission system concerned have been stored, the CPU 13 detects the SYN by means of software.

A problem encountered in the SYN detecting circuit described above is that, since all the serial-to-parallel-converted data have to be stored once in the memory in order to check the bits assigned to the SYN, it takes a long time to detect them.

In the specification of German Offenlegungschrift No. 37 22 567 which was published on January 19 1989, there was proposed a frame synchronization circuit employing an adjustable frame pulse counter having a synchronization word recognition circuit and a counting system for evaluating synchronization and loss of synchronization criteria, in which the counting system was preceded by a logic circuit to which a frame pulse from the pulse frame counter and a synchronization pulse from the synchronization word recognition circuit were applied, and the logic circuit delivered one synchronization criterion if the two pulses agreed and another synchronization criterion if the two pulses did not agree, the counting system being a bi-directional counter which added the one criterion and subtracted the other respectively, and the frame pulse counter being synchronised at a maximum value on the basis of a received synchronization word.

Features of embodiments to be described below by way of example in illustration of the present invention are that an FRM SYN detecting circuit is described which is capable of effecting detection in real time and which is capable of detecting any error in the frame format in which all bits of the synchronizing signal are designated with codes of an identical logic level.

In a particular embodiment to be described an FRM SYN detecting circuit includes first means for providing a first signal which takes logic 1 exclusively during the period in which the frame synchronizing signal is received, and second means for extracting any error bit present in the frame synchronizing signal, the second means having first gate means which receives both the first signal and the data signal transmitted through the frame synchronization data transmission system and produces a second signal corresponding to the logic product of the two signals. The second signal is the error bit.

The following description and Figs. 5 to 7 of the accompanying drawings disclose, by means of examples, the invention which is characterised in the appended claims, whose terms determine the extent of the protection conferred hereby.

In Figs. 5 to 7 of the drawings:-
Fig. 5 shows a block diagram of a first embodiment,
Fig. 6 represents a block diagram of error detecting circuit 4 shown in Fig. 5, and

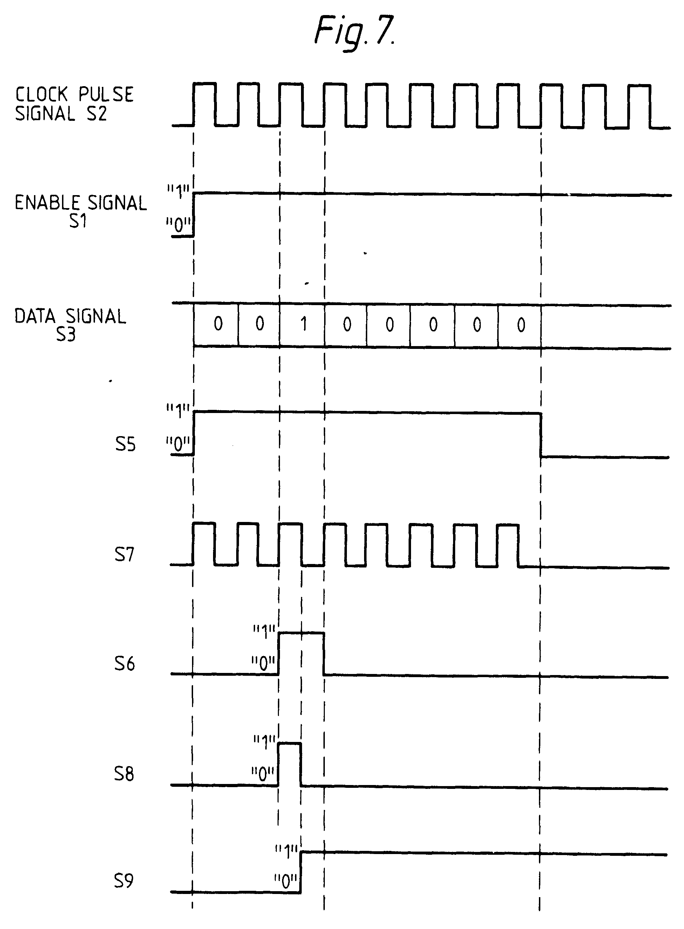

Fig. 7 represents a timing chart to illustrate the operations of parts of the circuits shown in Figs. 5 and 6.

Fig. 5 shows a block diagram of a first embodiment illustrative of the present invention, and Fig. 6 represents a block diagram of error detecting circuit 4 shown in Fig. 5. These figures illustrate a circuit for detecting a frame synchronizing signal or an FRM SYN detecting circuit. Fig. 7 represents a timing chart to illustrate the operations of parts of the circuits shown in Figs. 5 and 6. In this embodiment, the format of the frame is identical with that illustrated in Fig. 1, the FRM SYN being assigned to the starting octet with each bit being designated by logic 0. In Fig. 7, an FRM SYN including an error of a logic 1 in the third bit is shown.

The FRM SYN detecting circuit includes a first-signal generating circuit 1 for providing a first signal S5 and an error detecting circuit 4. The first-signal generating circuit 1 is made up of an 8 bit shift register circuit 2 and an AND gate 3. The shift register circuit 2 receives an enable signal S1, and shifts it by 8 bits in synchronization with a clock pulse signal S2, thereby delaying the enable signal S1 by 8 clock-pulse periods. The AND gate 3 produces a logical product of the enable signal S1 and an inverted delayed enable signal S4 and delivers the logical product as a first signal S5. Thus, the first signal S5 takes the value of a logic 1 exclusively while the FRM SYN is received (cf. signal S5 in Fig. 7). The error detecting circuit 4 is arranged to extract any error present in the FRM SYN. The error detecting circuit 4 has an AND gate 5 and a register circuit 6. The AND gate 5 receives both the first signal S5 and a data signal S3 and delivers the logical product as a second signal S6, thereby extracting the error bit in the FRM SYN (cf. signal S6 in Fig. 7). The register circuit 6 has AND gates 7, 8 and a D flip-flop 9. The AND gate 7 receives both the clock pulse signal S2 and the first signal S5 and delivers a clock pulse train S7, which is active only while the FRM SYN is received (cf. signal S7 in Fig. 7). The AND gate 8 receives both the second signal S6 and the clock pulse train S7 and delivers a clock pulse S8 which is synchronous with the two signals S6 and S7. The D flip-flop, which is enabled by the enable signal S1, receives the second signal S6 at its data input and the clock pulse S8 at its clock input, latches the second signal S6 at the trailing edge of the pulse S8 and provides an alarm signal S9. In this way the FRM SYN detecting circuit is able to detect any error present in the FRM SYN in real time.

It will be understood that, although particular embodiments have been described by way of example in illustration of the invention, variations and modifications thereof, as well as other embodiments may be made within the scope of the protection sought by the appended claims.

## Claims

1. A circuit for detecting a frame synchronizing signal in a frame synchronization data transmission system, characterised in that all bits of the frame synchronizing signal are designated with codes of an identical logic level, and in that the circuit includes first means (1) for providing a first signal (S5) which has the value of logic 1 exclusively during the period in which the frame synchronizing signal is received, and second means (4) for extracting any error bit present in the frame synchronizing signal, the second means (4) having first gate means (5) which receives both the first signal (S5) and the data signal (S3) transmitted through the frame synchronization data transmission system and produces a second signal (S6) corresponding to the logic product of the two signals, the second signal (S6) being the error bit.

2. A circuit as claimed in claim 1, wherein the first means (1) includes delaying means (2) and second gate means (3), the delaying means (2) delaying an enable signal (S1) received through the frame synchronization data transmission system by a transmission period of the frame synchronizing signal and delivering the delayed enable signal (S4), and the second gate means (3) providing the logical product of the enable signal (S1) and an inverted signal of the delayed enable signal (S4) and delivering the logical product as the first signal (S5).

3. A circuit as claimed in claim 2, wherein the delaying means (2) includes a shift register (2) with the same number of bits as that of the frame synchronizing signal, the shift register (2) receiving a clock pulse signal (S2) and the enable signal (S1) transmitted through the frame synchronization data transmission system, shifting the enable signal (S1) in synchronization with the clock pulse signal (S2) and delivering the serial output as the delayed enable signal (S4).

4. A circuit as claimed in claim 2, wherein the second means (4) includes a register (6) for registering the second signal (S6) .

5. A circuit as claimed in claim 4, wherein the register (6) has third gate means (7,8) and a D flip-flop (9), the third gate means (7,8) receiving both the second signal (S6) and the clock pulse signal (S2) transmitted through the frame synchronization data transmission system to select from the clock pulse signal (S2) a clock pulse (S7) which is synchronous with the second signal (S6), and the D flip-flop (9) latching the second signal (S6) in synchronization with the output of the third gate means (7,8).

## Patentansprüche

1. Schaltung zur Detektion eines Rahmensynchronisationssignals in einem Datenübertragungssystem mit Rahmensynchronisation, dadurch gekennzeichnet, daß alle Bits des Rahmensynchronisationssignals mit Codes eines identischen logischen Pegels bezeichnet werden, und daß die Schaltung erste Einrichtungen (1) zum Liefern eines ersten Signals (S5), das den Wert einer logischen 1 ausschließlich während der Periode aufweist, in der das Rahmensynchronisationssignal empfangen wird, und zweite Einrichtungen (4) zum Extrahieren jedes Fehlerbits, das im Rahmensynchronisationssignal vorhanden ist, aufweist, wobei die zweiten Einrichtungen (4) erste Toreinrichtungen (5) aufweisen, die sowohl das erste Signal (S5) als auch das Datensignal (S3) empfangen, das durch das Datenübertragungssystem mit Rahmensynchronisation übertragen wird, und ein zweites Signal (S6) erzeugen, das dem logischen Produkt der beiden Signale entspricht, wobei das zweite Signal (S6) das Fehlerbit ist.

2. Schaltung nach Anspruch 1, wobei die ersten Einrichtungen (1) Verzögerungseinrichtungen (2) und zweite Toreinrichtungen (3) aufweisen, wobei die Verzögerungseinrichtungen (2) ein Freigabesignal (S1), das durch das Datenübertragungssystem mit Rahmensynchronisation empfangen wird, um eine Übertragungsperiode des Rahmensynchronisationssignals verzögern und das verzögerte Freigabesignal (54) liefern, und die zweiten Toreinrichtungen (3) das logische Produkt des Freigabesignals (S1) und ein invertiertes Signal des verzögerten Freigabesignals (S4) bereitstellen und das logische Produkt als das erste Signal (S5) liefern.

3. Schaltung nach Anspruch 2, wobei die Verzögerungseinrichtungen (2) ein Schieberegister (2) mit derselben Anzahl von Bits wie jene des Rahmensynchronisationssignals aufweisen, wobei das Schieberegister (2) ein Taktimpulssignal (S2) und das Freigabesignal (S1) empfängt, das durch das Datenübertragungssystem mit Rahmensynchronisation übertragen wird, das Freigabesignal (S1) in Synchronisation mit dem Taktimpulssignal (S2) verschiebt und die serielle Ausgabe als das verzögerte Freigabesignal (S4) liefert.

4. Schaltung nach Anspruch 2, wobei die zweiten Einrichtungen (4) ein Register (6) zum Registrieren des zweiten Signals (S6) aufweisen.

5. Schaltung nach Anspruch 4, wobei das Register (6) dritte Toreinrichtungen (7,8) und ein D-Flipflop (9) aufweist, wobei die dritten Toreinrichtungen (7,8) sowohl das zweite Signal (S6) als auch das Taktimpulssignal (S2) empfangen, das durch das Datenübertragungssystem mit Rahmensynchronisation übertragen wird, um aus dem Taktimpulssignal (S2) einen Taktimpuls (S7) auszuwählen, der synchron mit dem zweiten Signal (S6) ist, und das D-Flipflop (9) auf das zweite Signal (S6) in Synchronisation mit der Ausgabe der dritten Toreinrichtungen (7,8) schaltet.

## Revendications

1. Circuit pour détecter un signal de synchronisation de trame dans un système de transmission de données à synchronisation de trame, caractérisé en ce que tous les bits du signal de synchronisation de trame sont désignés par des codes d'un niveau logique identique, et en ce que le circuit comprend des premiers moyens (1) pour délivrer un premier signal (S5) qui a la valeur de 1 logique exclusivement durant la période où le signal de synchronisation de trame est reçu, et des seconds moyens (4) pour extraire un quelconque bit d'erreur présent dans le signal de synchronisation de trame, les seconds moyens (4) ayant des premiers moyens formant portes (5) qui reçoivent à la fois le premier signal (S5) et le signal de données (S3) transmis par l'intermédiaire du système de transmission de données à synchronisation de trame et qui produisent un second signal (S6) correspondant au produit logique des deux signaux, le second signal (S6) étant le bit d'erreur.

2. Circuit selon la revendication 1, dans lequel les premiers moyens (1) comprennent des moyens à retard (2) et des deuxièmes moyens formant portes (3), les moyens à retard (2) retardant un signal de validation (S1) reçu par l'intermédiaire du système de transmission de données à synchronisation de trame d'une période de transmission du signal de synchronisation de trame et délivrant le signal de validation retardé (S4), et les deuxièmes moyens formant portes (3) délivrant le produit logique du signal de validation (S1) et un signal inversé du signal de validation retardé (S4) et délivrant le produit logique sous la forme du premier signal (S5).

3. Circuit selon la revendication 2, dans lequel les moyens à retard (2) comprennent un registre à décalage (2) avec le même nombre de bits que celui du signal de synchronisation de trame, le registre à décalage (2) recevant un signal d'impulsion d'horloge (S2) et le signal de validation (S1) transmis par l'intermédiaire du système de transmission de données à synchronisation de trame, décalant le signal de validation (S1) en synchronisation avec le signal d'impulsion d'horloge (S2) et délivrant la sortie série sous la forme du signal de validation retardé (S4).

4. Circuit selon la revendication 2, dans lequel les seconds moyens (4) comprennent un registre (6) pour enregistrer le second signal (S6) .

5. Circuit selon la revendication 4, dans lequel le registre (6) a des troisièmes moyens formant portes (7, 8) et une bascule D (9), les troisièmes moyens formant portes (7, 8) recevant à la fois le second signal (S6) et le signal d'impulsion d'horloge (S2) transmis par l'intermédiaire du système de transmission de données à synchronisation de trame pour sélectionner à partir du signal d'impulsion d'horloge (S2) une impulsion d'horloge (S7) qui est synchrone avec le second signal (S6), et la bascule D (9) verrouillant le second signal (S6) en synchronisation avec la sortie des troisièmes moyens formant portes (7, 8).
